(19) Europäisches Patentamt / European Patent Office / Office européen des brevets

(11) **EP 2 983 392 A1**

(12) **EUROPEAN PATENT APPLICATION**
published in accordance with Art. 153(4) EPC

(43) Date of publication:
**10.02.2016 Bulletin 2016/06**

(51) Int Cl.:
*H04W 16/16* (2009.01)     *H04W 8/26* (2009.01)
*H04W 16/32* (2009.01)     *H04W 72/04* (2009.01)

(21) Application number: **14779913.4**

(22) Date of filing: **25.03.2014**

(86) International application number:
**PCT/JP2014/058346**

(87) International publication number:
**WO 2014/162929 (09.10.2014 Gazette 2014/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **05.04.2013   JP 2013079296**

(71) Applicant: **NTT DOCOMO, INC.**
**Chiyoda-ku**
**Tokyo 100-6150 (JP)**

(72) Inventors:
• **KISHIYAMA, Yoshihisa**
  **Tokyo 100-6150 (JP)**
• **TAKEDA, Kazuaki**
  **Tokyo 100-6150 (JP)**
• **NAGATA, Satoshi**
  **Tokyo 100-6150 (JP)**

(74) Representative: **Hoffmann Eitle**
**Patent- und Rechtsanwälte PartmbB**
**Arabellastraße 30**
**81925 München (DE)**

(54) **WIRELESS BASE STATION, USER TERMINAL, AND WIRELESS COMMUNICATIONS METHOD**

(57)     The present invention is provided to randomize interference between small cells in a radio communication system in which the small cells are located to overlap a macro cell. The radio communication method of the present invention includes the steps of generating, in a small base station forming the small cell, a downlink signal by using a terminal-specific identity that is formed based on a first terminal-specific identity and a second terminal-specific identity, transmitting, in the small base station, the downlink signal to a user terminal, generating, in the user terminal, an uplink signal by using the terminal-specific identity, and transmitting, in the user terminal, the uplink signal to the small base station.

## FIG.3A

| 1st USID (504) | ⊗ | 2nd USID (X) |
|---|---|---|

X < 504 or X = 504 or X > 504

EP 2 983 392 A1

## FIG.3B

| | INDEPENDENT | | SHARED |
|---|---|---|---|
| CHANNEL/SIGNAL #A | 1st USID #A (504) | $\otimes$ | 2nd USID (X) |
| CHANNEL/SIGNAL #B | 1st USID #B (504) | $\otimes$ | 2nd USID (X) |
| CHANNEL/SIGNAL #C | 1st USID #C (504) | $\otimes$ | 2nd USID (X) |

## Description

Technical Field

The present invention relates to a radio base station, a user terminal and a radio communication method in a next-generation mobile communication system.

Background Art

In LTE (Long Term Evolution) and successor systems of LTE (referred to as, for example, "LTE-advanced," "FRA (Future Radio Access)" and "4G"), a radio communication system (referred to as, for example, "HetNet" (Heterogeneous Network)), in which small cells (including pico cells, femto cells and so on) having relatively small coverages of a radius of approximately several meters to several tens of meters are located to overlap a macro cell having a relatively large coverage of a radius of approximately several hundred meters to several kilometers, is under study (see, for example, non-patent literature 1).

For this radio communication system, a scenario to use the same frequency band in both the macro cell and the small cells (also referred to as, for example, "co-channel") and a scenario to use different frequency bands between the macro cell and the small cells (also referred to as, for example, "separate frequencies") are under study. To be more specific, the latter scenario is under study to use a relatively low frequency band (for example, 2 GHz) in the macro cell and use a relatively high frequency band (for example, 3.5 GHz or 10 GHz) in the small cells.

Citation List

Non-patent Literature

Non-Patent Literature 1: 3GPP TR 36.814 "E-UTRA Further Advancements for E-UTRA Physical Layer Aspects"

Summary of Invention

Technical Problem

Now, In LTE and in successor systems of LTE, signals (transmission signals by physical channels, reference signals and so on) are generated by using cell IDs (cell identities) that vary on a per cell basis. Consequently, it is possible to randomize the interference between the cells (inter-cell interference randomization).

However, when an attempt is made to assign a cell ID to every small cell in a radio communication system in which the small cells are located to overlap a macro cell, it may occur that the cell IDs run short and the cell IDs collide between the small cells. In this case, there is a threat that the interference between the small cells cannot be randomized.

The present invention has been made in view of the above, and it is therefore an object of the present invention to provide a radio base station, a user terminal and a radio communication method, whereby, in a radio communication system in which small cells are located to overlap a macro cell, the interference between the small cells can be randomized.

Solution to Problem

The radio communication method of the present invention is a radio communication method used in a radio communication system in which a small cell is located to overlap a macro cell, and this radio communication method includes the steps of generating, in a small bases station forming the small cell, a downlink signal by using a terminal-specific identity that is formed based on a first terminal-specific identity and a second terminal-specific identity, transmitting, in the small base station, the downlink signal to a user terminal, generating, in the user terminal, an uplink signal by using the terminal-specific identity, and transmitting, in the user terminal, the uplink signal to the small base station.

Advantageous Effects of Invention

According to the present invention, it is possible to provide a radio base station, a user terminal and a radio communication method, whereby, in a radio communication system in which small cells are located to overlap a macro cell, the interference between the small cells can be randomized.

Brief Description of Drawings

FIG. 1 is a conceptual diagram of a radio communication system in which small cells are located to overlap a macro cell;

FIG. 2 is a diagram to explain a radio communication system that simplifies cell planning;

FIG. 3 provides diagrams to explain USIDs according to a first example of the present invention;

FIG. 4 is a sequence diagram to illustrate a first example of reporting of USIDs according to the first example of the present invention;

FIG. 5 is a sequence diagram to illustrate a second example of reporting of USIDs according to the first example of the present invention;

FIG. 6 is a sequence diagram to illustrate a third example of reporting of USIDs according to the first example of the present invention;

FIG. 7 is a sequence diagram to illustrate a fourth example of reporting of USIDs according to the first example of the present invention;

FIG. 8 is a diagram to explain a CSI-RS hopping pattern according to a second example of the present invention;

FIG. 9 provides diagrams to explain EPDCCH resources;

FIG. 10 is a diagram to explain an EPDCCH resource hopping pattern according to a third example of the present invention;

FIG. 11 is a schematic diagram to illustrate an example of a radio communication system according to the present embodiment;

FIG. 12 is a diagram to explain an overall structure of a radio base station according to the present embodiment;

FIG. 13 is a diagram to explain an overall structure of a user terminal according to the present embodiment;

FIG. 14 is a diagram to explain a functional structure of a macro base station according to the present embodiment;

FIG. 15 is a diagram to explain a functional structure of a small base station according to the present embodiment;

FIG. 16 is a diagram to explain a functional structure of a user terminal according to the present embodiment; and

FIG. 17 is a diagram to explain the third example of reporting according to the first example of the present invention.

Description of Embodiments

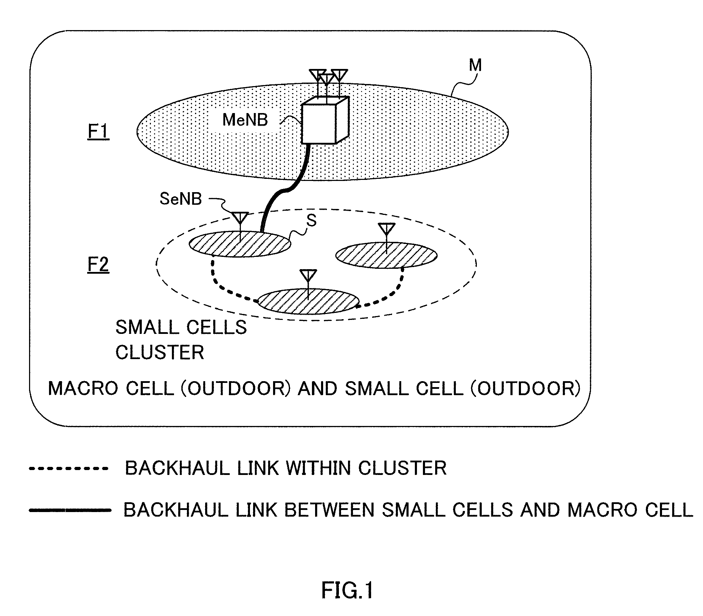

FIG. 1 is a conceptual diagram of a radio communication system, in which small cells are located to overlap a macro cell. In the radio communication system illustrated in FIG. 1, a macro cell M to use F1 (carrier) of a relatively low frequency such as, for example, 2 GHz and 800 MHz, and small cells S to use F2 (carrier) of a relatively high frequency such as 3.5 GHz and 10 GHz are located to overlap each other geographically (separate frequencies). Note that, although not illustrated, the same frequency band may be used between the macro cell M and the small cells S.

The radio communication system illustrated in FIG. 1 is formed by including a radio base station MeNB (hereinafter referred to as the "macro base station") that forms the macro cell M, radio base stations SeNB (hereinafter referred to as the "small base stations") that form the small cells S, and a user terminal UE that communicates with the macro base station MeNB and the small base stations SeNB.

Also, as illustrated in FIG. 1, the macro base station MeNB (macro cell M) and the small base stations SeNB (small cells S) may be connected via a channel (non-ideal backhaul) of relatively low speed (medium delay) such as the X2 interface, or may be connected via a channel (ideal backhaul) of relatively high speed (low delay) such as optical fiber. Also, the small base stations SeNB (small cells S) may be connected via a channel (non-ideal backhaul) of relatively low speed (medium delay) such as the X2 interface, or may be connected via a channel (ideal backhaul) of relatively high speed (low delay) such as optical fiber.

Also, in the radio communication system illustrated in FIG. 1, carrier aggregation (CA) is executed. Carrier aggregation refers to grouping a plurality of component carriers ("CCs," or simply referred to as "carriers") to achieve a wideband. Each CC has a bandwidth of maximum 20 MHz, so that, when, for example, maximum five CCs are grouped, a wideband of maximum 100 MHz is achieved.

To be more specific, in the radio communication system illustrated in FIG. 1, a scenario to group CCs of the macro cell M and CCs of at least one small cell S may be possible. Note that the CCs of the macro cell M and the CCs of the small cell S may be referred to as the "primary CCs (PCCs)" and the "secondary CCs (SCCs)," respectively. Also, the macro cell M and the small cell S may be referred to as the "primary cell (P cell)," and the "secondary cell (S cell)," respectively.

Also, in the radio communication system illustrated in FIG. 1, it is possible to use a new carrier type (NCT) in the small cells S. The NCT refers to a carrier that does not place a physical downlink control channel (PDCCH) in maximum three OFDM symbols at the top of a subframe. When the NCT is used, in the small cells S, it is possible to transmit downlink control information (DCI) by using an enhanced physical downlink control channel (EPDCCH) that is frequency-division-multiplexed with a physical downlink shared channel (PDSCH).

Now, in the radio communication system illustrated in FIG. 1, when cell IDs (cell identities) are assigned to every small cell S in addition to the macro cell M, there is a threat that the cell IDs collide between the small cells S and the interference between the small cells S cannot be randomized. Here, the cell IDs are 504 different sequences, and allocated to the cells on a fixed basis. A cell ID may be referred to as a "physical layer cell ID" (PCI: Physical layer Cell Identity) and so on. If an attempt is made to prevent these cell IDs, of which there are only 504, the cell planning of the small cells S becomes complex.

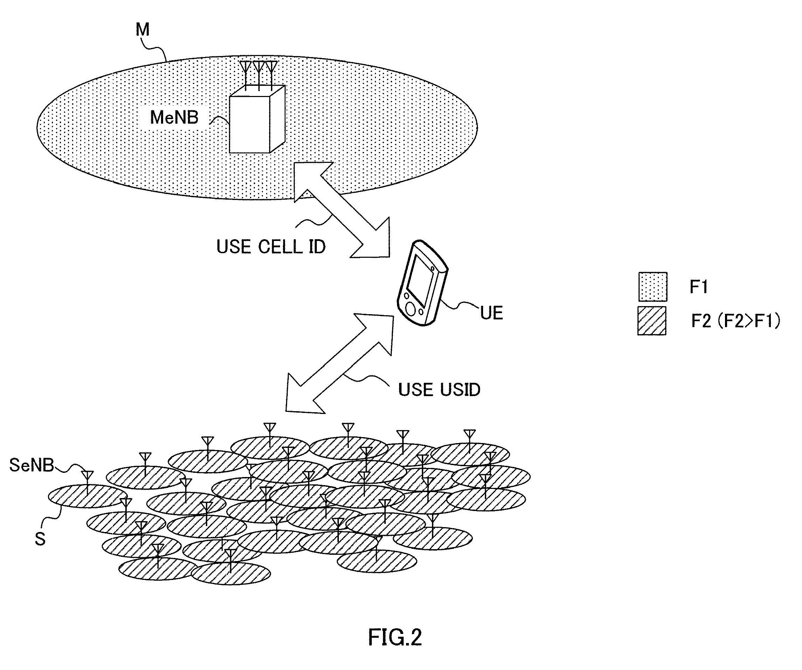

So, as illustrated in FIG. 2, a study is in progress to use cell IDs in communication in the macro cell M, and use USIDs (UE-specific Identities) in communication in the small cells S. Here, the USIDs are sequences that are specific to user terminals UE, and are also referred to as, for example, "virtual cell IDs" (Virtual Cell Identities). When these USIDs are used in communication in the small cells S, it is possible to reduce the rate of collisions of IDs compared to when cell IDs are used.

To be more specific, since the small cells S are assigned cell IDs on a fixed basis, if cell planning fails, cell IDs will keep colliding between neighboring small cells S. Meanwhile, since USIDs vary on a per user terminal UE basis, collisions of USIDs between neighboring small cells S become probabilistic. Consequently, when USIDs are used in communication in the small cells S, it is possible to reduce the rate of collisions of IDs, and simplify the cell planning between the small cells S.

Meanwhile, 504 USIDs are defined in release 11 (Rel-11). As illustrated in FIG. 2, when small cells S are located densely, it may occur that 504 or more user terminals UE are connected in neighboring small cells S. In this case, there is a threat that USIDs collide between user terminals UE located in neighboring small cells S, and the interference between the small cells S cannot be randomized sufficiently.

So, the present inventors have studied a radio communication method, whereby, in a radio communication system in which small cells S are densely located to overlap a macro cell M, the interference between the small cells can be randomized sufficiently even when the uplink/downlink signals in the small cell S are generated by using USIDs, and arrived at the present invention.

With the radio communication method according to the present invention, small base stations SeNB generate downlink signals by using USIDs that are formed based on first USIDs and second USIDs, and transmit these downlink signals to user terminals UE. The user terminals UE generate uplink signal by using the USIDs formed based on the first USIDs and the second USIDs, and transmit these uplink signals to the small base stations SeNB.

Here, the downlink signals include transmission signals by physical downlink channels, downlink reference signals and so on. The physical downlink channels include, for example, the above-noted PDSCH and EPDCCH, but are by no means limited to these. Also, the downlink reference signals include, for example, terminal-specific reference signals that are associated with the PDSCH (also referred to as "UE-Specific Reference Signals," "DM-RSs (Demodulation-Reference Signals)" and so on), demodulation reference signals that are associated with the EPDCCH (DM-RSs (Demodulation-Reference Signals)), channel state measurement reference signals (CSI-RSs: Channel State Information-Reference Signals), small cell S detection signals (DSs: Discovery Signals) and so on, but are by no means limited to these.

Also, the uplink signals include transmission signals by physical uplink channels, uplink reference signals and so on. The physical uplink channels include, for example, a physical uplink shared channel (PUSCH), a physical uplink control channel (PUCCH), a physical random access channel (PRACH) and so on, but are by no means limited to these. Also, the uplink reference signals include, for example, demodulation reference signals (DM-RSs) for the PUSCH or the PUCCH, SRSs (Sounding Reference Signals) and so on, but are by no means limited to these.

With the radio communication method according to the present invention, downlink/uplink signals are generated in small cells S by using USIDs that are formed based on first USIDs and second USIDs. Consequently, it is possible to prevent collisions of USIDs between user terminals UE located in neighboring small cells S, and randomize the interference between the small cells S sufficiently.

(First Example)

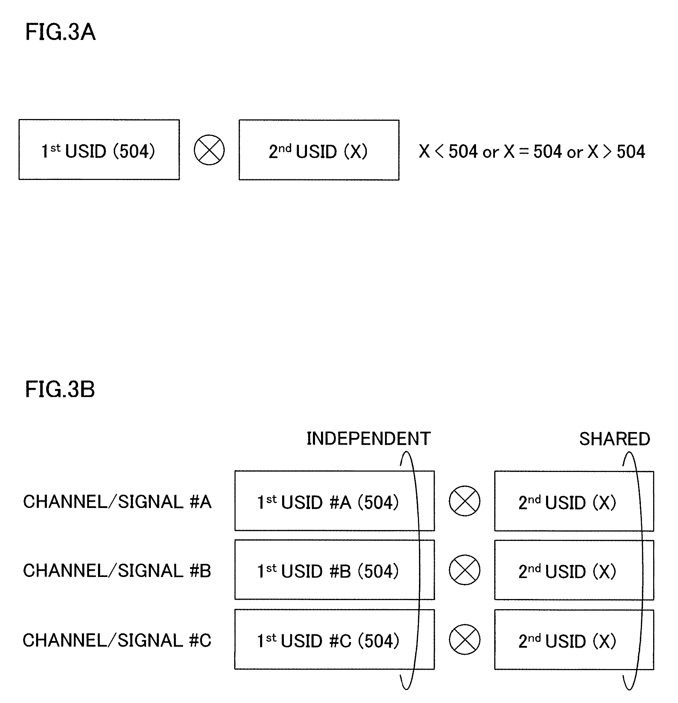

The radio communication method according to a first example of the present invention will be described with reference to FIG. 3 to FIG. 7. With the radio communication method according to the first example, a downlink/uplink signal is generated by using a USID (terminal-specific identity) that are formed based on a first USID (first terminal-specific identity) and a second USID (second terminal-specific identity).

(USID)

FIG. 3 provides diagrams to explain the USIDs used in the radio communication method according to the first example. As illustrated in FIG. 3, the USID is formed based on a first USID and a second USID. The first USIDs are user terminal UE-specific sequences, and, for example, the 504 sequences of release 11 are used. Also, the second USIDs are X sequences (X<504, or X=504, or X>504). The second USIDs are not limited to user terminal UE-specific sequences, as long as the operation result with the first USIDs give user terminal UE-specific sequences.

As illustrated in FIG. 3A, the USIDs to be used to generate downlink/uplink signals are formed by multiplying first USIDs and second USIDs (double diffusion). By this means, it is possible to increase the number of USID sequences to 504·X (X<504, or X=504, or X>504).

Note that the method of operating the first USIDs and the second USIDs is not limited to multiplication. For example, addition and so on may be used as long as the number of USID sequences formed by operating the first USIDs and the second USIDs becomes greater than 504 of release 11. Also, predetermined parameters and so on may be used in the operation.

Also, the USIDs may be formed to match the USIDs of release 11 when the second USIDs are set to "0." In this case, a USID is formed by, for example, following equation 1:

$$\mathrm{USID} = \mathrm{first\ USID} + \mathrm{second\ USID} \times \mathrm{the\ number\ of\ first\ USIDs\ (504)}$$

$$\dots \mathrm{(Equation\ 1)}$$

Also, as illustrated in FIG. 3B, the first USIDs may be independently applied to each downlink/uplink signal. On the other hand, the second USIDs may be applied on a shared basis to each downlink/uplink signal, or may be applied on a shared basis per group (when, for example, grouping is based on the downlink/uplink).

For example, referring to FIG. 3B, assume that channel/signal #A is a downlink signal (for example, a transmission signal by the EPDCCH), channel/signal #B is another downlink signal (for example, a CSI-RS), and channel/signal #A is an uplink signal (for example, a DM-RS). In this case, first USIDs #A, #B and #C, which are mutually different, are each selected from 504 first USIDs and applied to a plurality of (different) channel/signals #A, #B and #C. Meanwhile, a common (the same) second USID is selected from X second USIDs and applied to these plurality of (different) channel/signals #A, #B and #C.

Note that, although not illustrated, when second USIDs are applied on a shared basis per group (here, grouping is based on the downlink/uplink), it is possible to apply a common second USID to channel/signals #A and #B, which are downlink signals, and apply a second USID that is different from that of channel signals #A and #B, to channel/signal #C, which is an uplink signal.

(Examples of Reporting of USIDs)

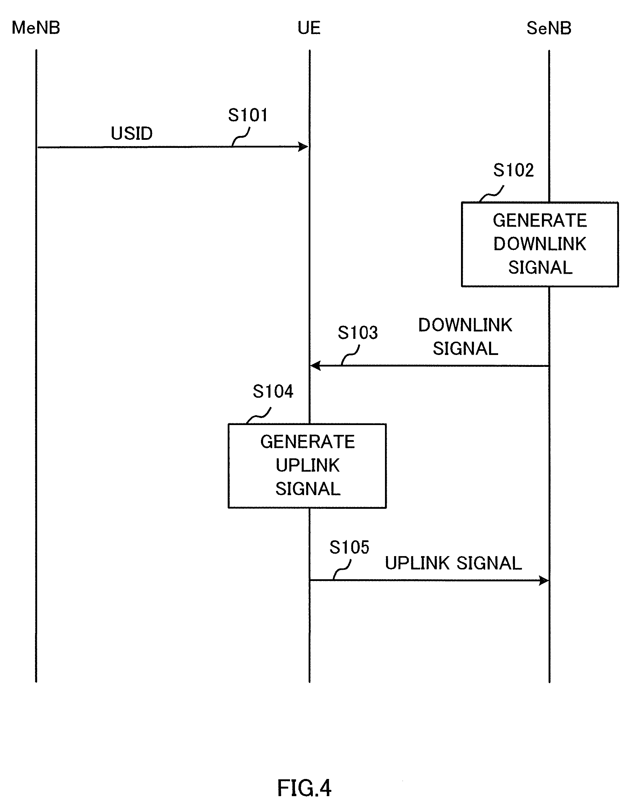

Examples of reporting of the USIDs used in the radio communication method according to the first example will be described with reference to FIGs. 4 to 7. Note that, although, as in FIG. 2, FIGs. 4 to 7 assume that cell IDs are used in the communication in the macro cell M (macro base station MeNB, P cell) and USIDs are used in the communication in the small cells S (small base stations SeNB, S cells), this is by no means limiting. For example, USIDs may be used in the communication in the macro cell M. Furthermore, the macro cell M (macro base station MeNB, P cell) and the small cells S (small base stations SeNB, S cells) may be each a transmission point, and/or the like.

Also, with the radio communication method according to the first example, whether or not to form USIDs based on first USIDs and second USIDs is determined depending on the transmission mode and/or the carrier type in the small cells S. For example, when a NCT (New Carrier Type) is configured in the small cells S, the USIDs may be formed based on first USIDs and second USIDs. Also, when a carrier type to place a PDCCH is configured, the USIDs may be formed not based on second USIDs (the USIDs of release 11).

Also, whether or not to form USIDs based on first USIDs and second USIDs may be switched semi-statically or dynamically, depending on the transmission mode and/or the carrier type in the small cells S and so on.

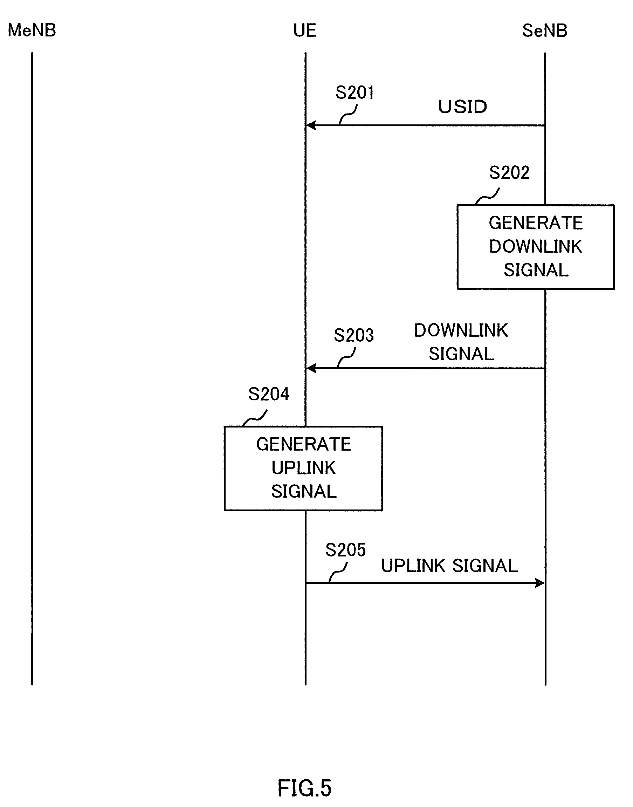

Now, examples of reporting when USIDs are formed based on first USIDs and second USIDs (see FIG. 3) will be described below. Note that the examples of reporting illustrated in FIG. 4 and FIG. 5 are applicable when USIDs are formed not based on second USIDs (when the USIDs of release 11 are used).

(First Example of Reporting)

FIG. 4 is a sequence diagram to illustrate a first example of reporting of USIDs. According to the first example of reporting, USIDs that are formed based on first USIDs and second USIDs (see FIG. 3) are reported from a macro base station MeNB (P cell) to user terminals UE.

As illustrated in FIG. 4, the macro base station MeNB reports USIDs, which are formed based on first USIDs and second USIDs (see FIG. 3), to the user terminals UE (step S101). To be more specific, the macro base station MeNB reports the USIDs to the user terminals UE separately by using higher layer signaling such as RRC signaling.

The small base stations SeNB generate downlink signals by using the USIDs reported to the user terminals UE in step S101 (step S102). Note that the USIDs to use to generate the downlink signals may be reported from the macro base station MeNB to the small base stations SeNB, or may be stored in advance in the small base stations SeNB.

To be more specific, the small base stations SeNB may initialize pseudo-random sequences (scrambling sequences) C(i) based on the above USIDs, and generate (scramble) CSI-RSs based on the initialized pseudo-random sequences. For example, a pseudo-random sequence C(i) may be initialized using equation 2.

[1]

$$c_{\mathrm{init}} = 2^{10} \cdot \left(7 \cdot (n_s + 1) + l + 1\right) \cdot \left(2 \cdot N_{\mathrm{ID}}^{\mathrm{CSI}} + 1\right) + 2 \cdot N_{\mathrm{ID}}^{\mathrm{CSI}} + N_{\mathrm{CP}} \qquad \ldots (\mathrm{Equation}\ 2)$$

Here, $N_{\mathrm{ID}}^{\mathrm{CSI}}$ is equal to the above USID. Note that $n_s$ is the slot number in the radio frame. Also, $N_{\mathrm{CP}}$ is set to 1 when the normal CP (Normal Cyclic Prefix) is used, and set to 0 when an extended CP (Extended Cyclic Prefix) is used. Also, the small base stations SeNB may initialize user-specific scrambling sequences C(i) based on the above USIDs, and generate (scramble) transmission signals by the EPDCCH based on the initialized scrambling sequences. For example, a scrambling sequence C(i) may be initialized using equation 3:

[2]

$$c_{\mathrm{init}} = \lfloor n_s / 2 \rfloor \cdot 2^9 + n_{\mathrm{ID},m}^{\mathrm{EPDCCH}} \qquad \ldots (\mathrm{Equation}\ 3)$$

Here, $N_{\mathrm{ID},m}^{\mathrm{EPDCCH}}$ is equal to the above USID. Note that $n_s$ is the slot number in the radio frame. Also, m is the EPDCCH set number.

Also, the small base stations SeNB may initialize pseudo-random sequences (scrambling sequences) C(i) based on the above USIDs, and generate (scramble) DM-RSs to be associated with the EPDCCH based on the initialized pseudo-random sequences. For example, a pseudo-random sequence C(i) may be initialized using equation 4:

[3]

$$c_{\mathrm{init}} = \left(\lfloor n_s / 2 \rfloor + 1\right) \cdot \left(2 n_{\mathrm{ID},i}^{\mathrm{EPDCCH}} + 1\right) \cdot 2^{16} + n_{\mathrm{SCID}}^{\mathrm{EPDCCH}} \qquad \ldots (\mathrm{Equation}\ 4)$$

Here, $N_{\mathrm{ID},i}^{\mathrm{EPDCCH}}$ is equal to the above USID. Note that $n_s$ is the slot number in the radio frame. Also, $N_{\mathrm{ID},i}^{\mathrm{EPDCCH}}$ is, for example, 2.

Also, the small base stations SeNB may initialize pseudo-random sequences (scrambling sequences) C(i) based on the USIDs reported to the user terminals UE in step S101, and generate (scramble) DM-RSs to be associated with the PDSCH based on the initialized pseudo-random sequences. For example, a pseudo-random sequence C(i) may be initialized using equation 5:

[4]

$$c_{\mathrm{init}} = \left(\lfloor n_s / 2 \rfloor + 1\right) \cdot \left(2 n_{\mathrm{ID}}^{(n_{\mathrm{SCID}})} + 1\right) \cdot 2^{16} + n_{\mathrm{SCID}} \qquad \ldots (\mathrm{Equation}\ 5)$$

Here, $N_{\mathrm{ID}}^{(i)}$ is equal to the above USID. Note that $n_s$ is the slot number in the radio frame. Also, $N_{\mathrm{SCID}}$ is set to 0 or 1. The small base stations SeNB transmit the downlink signals generated in the above-described manner to the user terminals UE (step S103). The user terminals UE perform the receiving process (descrambling) of the downlink signals using the USIDs reported from the macro base station MeNB. Note that the downlink signals to be generated using USIDs are not limited to the above-noted CSI-RSs, transmission signals by the EPDCCH, DM-RSs for the EPDCCH, and DM-RSs for the PDSCH. For example, it is equally possible to use USIDs to generate transmission signals by the PDSCH and small cell S detection signals (discovery signals).

The user terminals UE generate uplink signals by using the USIDs reported from the macro base station MeNB (step S104).

To be more specific, the user terminals UE may initialize pseudo-random sequences (scrambling sequences) C(i) based on the above USIDs, and generate (scramble) DM-RSs for the PUSCH based on the initialized pseudo-random sequences. For example, a pseudo-random sequence C(i) may be initialized using equation 6:

[5]

$$c_{\text{init}} = \left\lfloor \frac{N_{\text{ID}}^{\text{csh\_DMRS}}}{30} \right\rfloor \cdot 2^5 + \left( N_{\text{ID}}^{\text{csh\_DMRS}} \bmod 30 \right) \quad \dots \text{(Equation 6)}$$

Here, $N_{\text{ID},}^{\text{csh\_DMRS}}$ is equal to the above USID.

Also, the user terminals UE may initialize pseudo random sequences (scrambling sequences) C(i) based on the USIDs reported from the macro base station MeNB in step S101, and apply group hopping to the DM-RSs for the PUSCH or the PUCCH, transmission signals by the PUCCH and so, on based on the initialized pseudo random sequences. For example, a pseudo random sequence C(i) may be initialized using equation 7:

[6]

$$c_{\text{init}} = \left\lfloor \frac{n_{\text{ID}}^{\text{RS}}}{30} \right\rfloor \quad \dots \text{(Equation 7)}$$

Here, $N_{\text{ID},}^{\text{RS}}$ is equal to the USID reported from the macro base station MeNB in step S101.

The user terminals UE transmit the uplink signals generated in the above-described manner to the small base stations SeNB (step S105). The small base stations SeNB perform the receiving process (descrambling) of the uplink signals using the above-noted USIDs. Note that the uplink signals to be generated using USIDs are by no means limited to the above-noted DM-RSs, transmission signals by the PUCCH, and/or the like. For example, it is equally possible to use USIDs to generate SRSs and transmission signals by the PUSCH and the PRACH.

According to the first example of reporting, USIDs that are formed based on first USIDs and second USIDs are reported from the macro base station MeNB, similar to the USIDs of release 11 (USIDs that are formed based on first USIDs alone). Consequently, it is possible to randomize the interference between the small cells S sufficiently while reducing the load of implementation for the expansion of USIDs.

(Second Example of Reporting)

FIG. 5 is a sequence diagram to illustrate a second example of reporting of USIDs. According to the second example of reporting, USIDs that are formed based on first USIDs and second USIDs (see FIG. 3) are reported from small base stations SeNB (S cells) to user terminals UE.

As illustrated in FIG. 5, the small base stations SeNB report USIDs, which are formed based on first USIDs and second USIDs, to the user terminals UE (step S201). To be more specific, the small base stations SeNB may report the USIDs to the user terminals UE separately, by using higher layer signaling such as RRC signaling.

Alternatively, the small base stations SeNB may report the USIDs by tagging (linking) the USIDs to the signal sequences of the small cell S detection signals (discovery signals). Note that the USIDs may be reported from the macro base station MeNB to the small base stations SeNB, or may be stored in advance in the small base stations SeNB.

The small base stations SeNB generate downlink signals using the USIDs reported to the user terminals UE in step S201 (step S202). Note that the details of step S202 and S203 are the same as steps S102 and S103 in FIG. 4, and therefore description will be omitted.

The user terminals UE generate uplink signals using the USIDs reported from the small base stations SeNB (step S204). Note that the details of step S204 and S205 are the same as steps S104 and S105 in FIG. 4, and therefore description will be omitted.

According to the second example of reporting, USIDs that are formed based on first USIDs and second USIDs are reported from the small base stations SeNB. Consequently, the user terminals UE can acquire USIDs without connecting with the macro base station MeNB. As a result of this, it is possible to randomize the interference between the small cells S sufficiently, while reducing the load of implementation upon carrying out handover between the small cells S.

Note that the first and second examples of reporting (FIGs. 4 and 5) are equally applicable even when the USIDs of release 11 (USIDs that are formed based on first USID alone) are used. To be more specific, in step S101 in FIG. 4 and step S201 in FIG. 5, the small base stations SeNB may report the USIDs of release 11 to the user terminals UE.

(Third Example of Reporting)

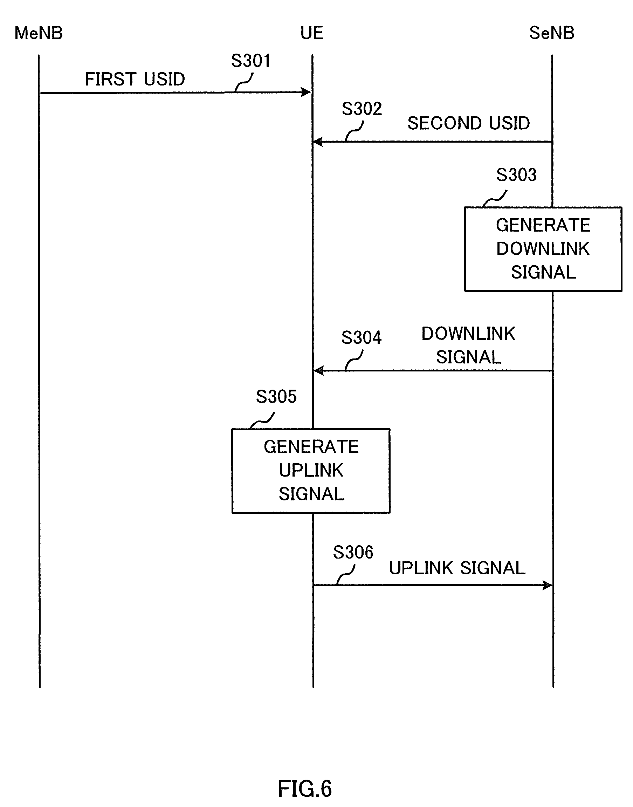

FIG. 6 is a sequence diagram to illustrate a third example of reporting of USIDs. According to the third example of reporting, first USIDs are reported from a macro base station MeNB (P cell) to user terminals UE, and second USIDs are associated with detection signals (discovery signals) that are transmitted from small base stations SeNB (S cells).

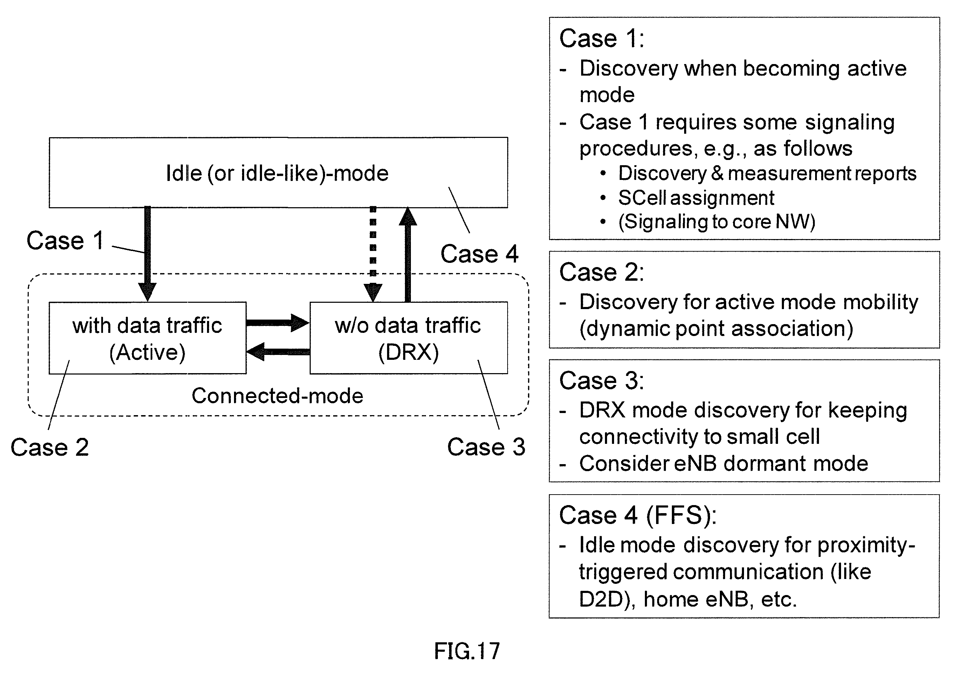

Here, the detection signals may be transmitted in a relatively long cycle (for example several hundred msec or more) so as to reduce the power consumption of the small base stations SeNB. Also, it is equally possible to receive the detection signals in a relatively long cycle (of, for example, several seconds or more), so as to reduce the power consumption of the user terminals UE as well. By this means, even when, for example, the base stations are in intermittent transmission mode (dormant mode) for reduced power consumption or the user terminals are in intermittent reception mode (idle mode, DRX mode and so on, as illustrated in FIG. 17), it is still possible to receive the detection signals.

An example of receiving detection signals will be described with reference to FIG. 17. Referring to FIG. 17, when user terminals UE in idle mode (or idle-like mode) (state in which the user terminals UE are not connected to small base stations SeNB (small cells S)) make a transition to active mode, the user terminals UE receive detection signals and detect small base stations SeNB (small cells S) (case 1). In case 1, the user terminals UE measure the received quality of detection signals from the small base stations SeNB, and transmit a measurement report, which includes the measurement result, to the macro base station MeNB. By this means, the small base stations SeNB (small cell S) that are detected are allocated as S cells.

Also, user terminals UE in active mode (state in which the user terminals UE are connected to small base stations SeNB (small cells S) and have data traffic) receive detection signals in a predetermined cycle (case 2). Also, user terminals UE in DRX mode (state in which the user terminals UE are connected to small base stations SeNB (small cells S) but have no data traffic) receive detection signals in, for example, a longer cycle than in active mode (case 3). In case 3, the small base stations SeNB may make a transition to intermittent transmission mode (dormant mode).

Also, user terminals UE in idle mode (or idle-like mode) (state in which the user terminals UE are not connected to small base stations SeNB (small cells S), and especially when D2D (Device to Device) communication is carried out), receive detection signals in, for example, a longer cycle than in active mode (case 4). With the third example of reporting, the above-noted second USIDs may be associated with the detection signals received in the user terminals UE in cases 1 to 4.

The sequence of the third example of reporting will be described in detail with reference to FIG. 6. As illustrated in FIG. 6, a macro base station MeNB reports first USIDs to user terminals UE (step S301). To be more specific, the macro base station MeNB reports the USIDs to the user terminals UE separately, by using higher layer signaling such as RRC signaling.

The small base stations SeNB report second USIDs to the user terminals UE (step S302). To be more specific, the small base stations SeNB may report the second USIDs by tagging (linking) the second USIDs to the signal sequences of the detection signals (discovery signals) that are detected as has been described with reference to FIG. 17. Alternatively, the small base stations SeNB may broadcast the second USIDs as well.

Note that the second USIDs may be reported from the macro base station MeNB to the small base stations SeNB, or may be stored in advance in the small base stations SeNB. Also, the first USIDs may also be reported from the macro base station MeNB to the small base stations SeNB, or may be stored in advance in the small base stations SeNB.

The small base station SeNB operate USIDs based on the above first USIDs and second USIDs, and generate downlink signals using the USIDs operated (step S303). For example, the small base stations SeNB multiply the first USIDs and second USIDs and generate USIDs, as illustrated in FIG. 3. Note that the details of the generation of downlink signals in step S303 are the same as step S102 in FIG. 4, and therefore description will be omitted.

The small base stations SeNB transmit the generated downlink signals to the user terminals UE (step S304). The user terminals UE operate USIDs based on the first USIDs reported from the macro base station MeNB and the second USIDs reported from the small base stations SeNB, and perform the receiving process (descrambling) of the downlink signals based on the USIDs that are operated. For example, as illustrated in FIG. 3, the user terminals UE multiply the first USIDs and second USIDs and generate USIDs.

The user terminals UE generate uplink signals (step S305) using the USIDs operated based on the first USIDs and the second USIDs. Note that the details of the generation of uplink signals in step S305 are the same as step S104 in FIG. 4, and therefore description will be omitted.

The user terminals UE transmit the generated uplink signals to the small base stations SeNB (step S306). The small base stations SeNB perform the receiving process (descrambling, demapping) of the downlink signals based on the USIDs operated in the above-described manner.

According to the third example of reporting, while the first USIDs are reported from the macro base station MeNB, the second USIDs are reported from the small base stations SeNB. By this means, for example, it is possible to reduce the amount of control signals from the macro cell M when handover is carried out between the small cells S.

(Fourth Example of Reporting)

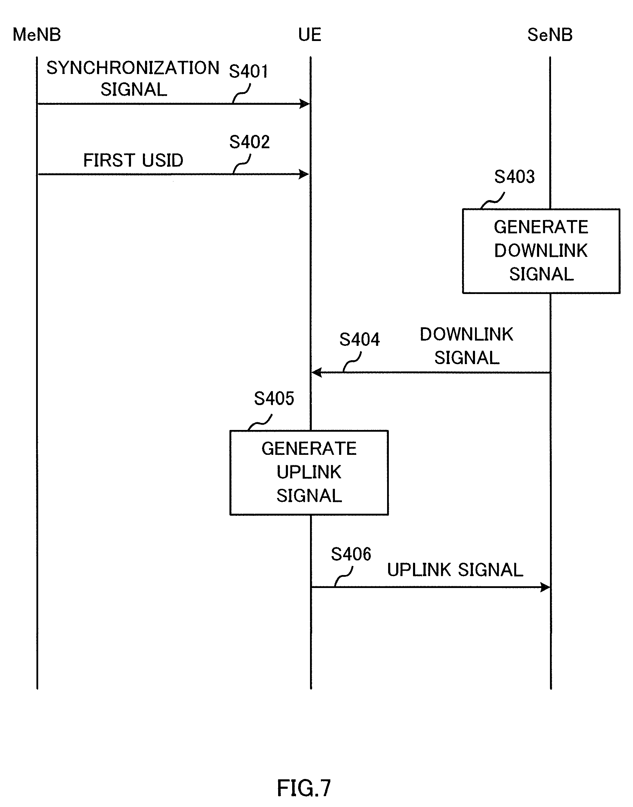

FIG. 7 is a sequence diagram to illustrate a fourth example of reporting of USIDs. According to the fourth example of reporting, first USIDs are reported from a macro base station MeNB (P cell) to user terminals UE, and second USIDs are associated with the cell ID (cell identity) of the macro cell M.

As illustrated in FIG. 7, the macro base station MeNB transmits synchronization signals (PSS: Primary Synchronization Signal, SSS: Secondary Synchronization Signal), which are used to detect cell IDs in the user terminals UE) (step S401). The user terminals UE detect cell IDs based on the synchronization signals transmitted from the macro base station MeNB. The user terminals UE acquire the second USIDs associated (tagged, linked, etc.) with the cell IDs.

Also, the macro base station MeNB reports the first USIDs to the user terminals UE (step S402). To be more specific, the macro base station MeNB reports the first USIDs to the user terminals UE separately by using higher layer signaling such as RRC signaling.

Note that steps S403 to S406 are the same as steps S303 to S306 in FIG. 6, and therefore description will be omitted.

According to the fourth example of reporting, the second USIDs are associated with the cell ID of the macro cell M, so that it is not necessary to report the second USIDs to the user terminals UE separately. Consequently, it is possible to reduce the amount of signaling involved in the reporting of USIDs.

(Second Example)

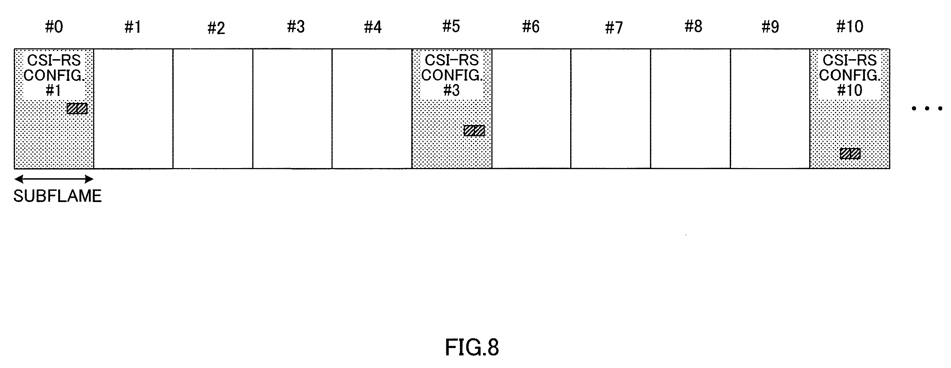

A radio communication method according to a second example of the present invention will be described with reference to FIG. 8. With the radio communication method according to the second example, CSI-RSs, which are generated using the above-described USIDs, are mapped to resources that are arranged and hopped in accordance with a hopping pattern. Note that the USIDs to be used in the radio communication method according to the second example may be USIDs that are formed based on first USIDs and second USIDs, or may be the USIDs of release 11.

The CSI-RSs are arranged in arrangement resources (for example, resource elements) designated by CSI-RS configurations (CSI Reference Signal configurations) in a predetermined cycle (for example, in a five-subframe cycle). Here, the CSI-RS configurations indicate the amount of shift (k', 1') in frequency resources (k in subcarriers) and in time resources (1 in OFDM symbols). Based on this amount of shift, the resources to arrange the CSI-RSs are determined. For example, in the event of the normal CP (Cyclic Prefix) of release 11, 32 kinds of CSI-RS configurations #0 to #31 are defined. Note that a CSI-RS configuration may be referred to as a "CSI-RS Config.," a "Config.," and so on.

These CSI-RS configurations are configured semi-statically, and reported to user terminals UE through higher layer signaling such as RRC signaling. Consequently, once resources where CSI-RSs are arranged collide between small cells S, this collision will keep occurring until new CSI-RS configurations are re-configured. As a result of this, there is a threat that it is not possible to achieve a sufficient effect of randomizing interference between the small cells S with respect to CSI-RSs.

So, with the radio communication method according to the second example, the resources where CSI-RSs are arranged are prevented from colliding each other between small cells S by hopping CSI-RS configurations in accordance with a hopping pattern. As a result of this, it is possible to improve the effect of randomizing interference between the small cells S with respect to CSI-RSs.

(Hopping Pattern of CSI-RS Configurations)

FIG. 8 is a diagram to illustrate a hopping pattern of CSI-RS configurations. FIG. 8 assumes that CSI-RS configuration (CSI-RS Config) #1 is configured to user terminals UE by way of higher layer signaling. Note that, although FIG. 8 assumes that CSI-RSs are arranged in a five-subframe cycle, this is by no means limiting.

As illustrated in FIG. 8, CSI-RS configurations are hopped in accordance with a hopping pattern. Here, the hopping pattern refers to the combination of CSI-RS configurations, determined by a function based on time. For example, referring to FIG. 8, a CSI-RS in arranged in subframe #0 based on CSI-RS configuration #1. Meanwhile, a CSI-RS is arranged in subframe #5 based on CSI-RS configuration #3. Also, a CSI-RS is arranged in subframe #10 based on CSI-RS configuration #10. The combination of these CSI-RS configurations (#1, #3 and #10) in subframes #0, #5 and #10 may be referred to as the "hopping pattern."

Also, in FIG. 8, the CSI-RS configurations (Configs.) that are configured in subframes #0, #5 and #10, respectively, may be determined based on equation 8:

$$\mathrm{config.} = \{\mathrm{Base\_config.} + \mathrm{h(t)}\} \bmod 32 \qquad \ldots \mathrm{(Equation\ 8)}$$

Here, Base_config. is a CSI-RS configuration that is configured by higher layer signaling such as RRC signaling. Also, h(t) is a function to represent the hopping pattern, and t is time (which is, for example, the frame number or the subframe number, and which is the subframe number in FIG. 8).

In equation 8, even when the hopping pattern h(t) is the same, when different Base_configs. are assigned, it is possible to avoid collisions of resources where CSI-RSs are arranged. Consequently, it is also possible to make CSI-RSs orthogonal between small cells S.

Also, in FIG. 8, the cycle of applying the hopping pattern (in FIG. 8, the combination of CSI-RS configurations #1, #3 and #10) is also referred to as the "hopping cycle." This hopping cycle may be determined in subframe (10 msec) units, or may be determined in radio frame (100 msec) units. For example, the hopping cycle of FIG. 8 is: 5 subframes × 3 = 15 subframes.

Also, when a NCT is employed in the small cells S (S cells), frame synchronization is established in the macro cell M (P cell). Consequently, it is possible to make the hopping cycle a comparatively long cycle, such as, for example, 1024 msec. By making the hopping cycle longer, the combinations of CSI-RS configurations in the hopping cycle increase, so that it is possible to increase the number of hopping patterns. As a result of this, it is possible to further improve the effect of randomizing the interference between the small cells S.

Note that the CSI-RS configurations to be hopped in the above-described manner may be zero-power or may be non-zero-power. Zero-power CSI-RS configurations indicate the locations of resources where CSI-RSs are not transmitted. On the other hand, non-zero-power CSI-RS configurations indicate the locations of resources where CSI-RSs are not transmitted. It is possible to randomize the interference estimation resources by hopping zero-power/non-zero-power CSI-RS configurations in a predetermined cycle.

(Example of Reporting of Hopping Patterns of CSI-RS Configurations)

Next, examples of reporting of CSI-RS configuration hopping patterns will be described. Note that, in the following description, the CSI-RS configuration hopping patterns may be reported from either the macro base station MeNB (P cell) or the small base stations SeNB (S cells), to user terminals UE.

To be more specific, the CSI-RS configuration hopping patterns (for example, the above-noted h(t)) may be reported to the user terminals UE through higher layer signaling such as RRC signaling. In above equation 8, there are 32 kinds of "Base_configs." Consequently, the total number of hopping patterns becomes equal to the number of bits secured for 32 × h(t).

Also, the CSI-RS configuration hopping patterns may be associated (linked) with USIDs. Also, when USIDs that are formed based on first USIDs and second USIDs are used, the CSI-RS configuration hopping patterns may be associated with the second USIDs. In this case, the hopping patterns need not be reported apart from the USIDs, so that it is possible to reduce the amount of signaling.

Also, with the radio communication method according to the second example, whether or not to apply (ON/OFF) CSI-RS configuration hopping may be designed switchable. To be more specific, whether or not to apply CSI-RS configuration hopping may be associated with the value of the hopping pattern h(t) of CSI-RS configurations and configured to the user terminals UE. For example, when the above-noted h(t) assumes a specific value (for example, "0"), this might mean that CSI-RS configuration hopping is not applied ("OFF"). Also, when values other than the specific value are assumed (for example, "1" or greater), this might mean that CSI-RS configuration hopping is applied ("ON").

Also, whether or not to apply CSI-RS configuration hopping may be reported to the user terminals UE by way of the value of second USIDs. Also, whether or not to apply CSI-RS configuration hopping may be reported to the user terminals UE depending on whether or not USIDs are formed based on second USIDs. For example, when USIDs are formed based on second USIDs, this might mean that CSI-RS configuration hopping is applied.

Also, it is equally possible to report whether or not to apply CSI-RS configuration hopping to the user terminals UE by using independent bits. For example, when one bit is used, "0" may indicate that CSI-RS configuration hopping is not applied ("OFF"), and "1" may indicate that CSI-RS configuration hopping is applied ("ON").

With the radio communication method according to the second example, by hopping CSI-RS configurations, it is possible to change the resources to arrange CSI-RSs in a simplified manner, and in a short cycle, compared to the case where the resources to arrange CSI-RSs are re-configured. As a result of this, it is possible to improve the effect of randomizing the interference between the small cells S with respect to CSI-RSs.

(Third Example)

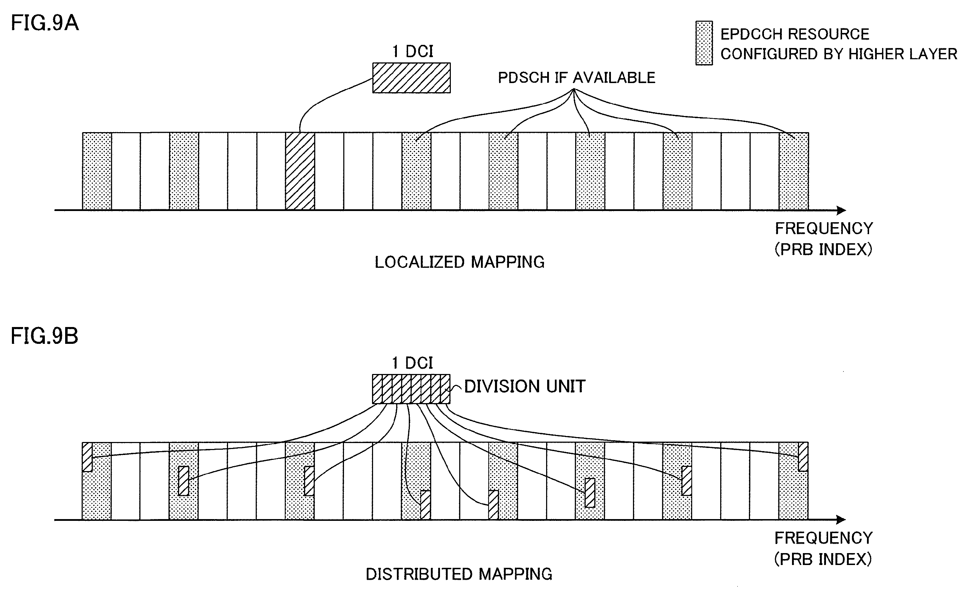

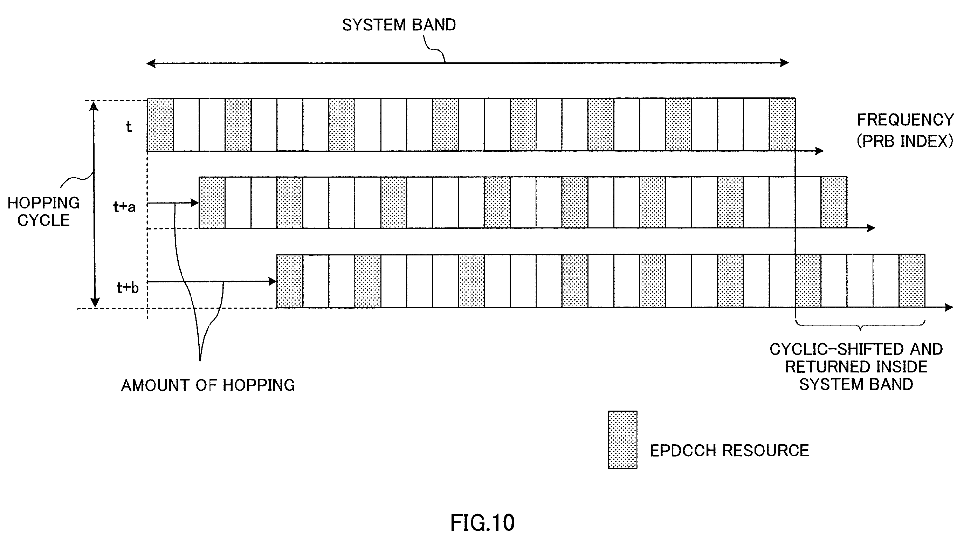

The radio communication method according to a third example of the present invention will be described with reference to FIGs. 9 and 10. With the radio communication method according to the third example, EPDCCH transmission signals, which are generated using the above-described USIDs, are mapped to resources that are arranged and hopped based on a hopping pattern (hereinafter referred to as "EPDCCH resources"). Note that the USIDs to be used in the radio communication method according to the third example may be USIDs that are formed based on first USIDs and second USIDs, or may be the USIDs of release 11.

FIG. 9 provides diagrams to explain EPDCCH resources. As illustrated in FIG. 9, EPDCCH resources are comprised of a predetermined number of physical resource blocks (PRBs) (or hereinafter referred to as "PRB pairs," or referred to simply as "PRBs") that are distributed over the system bandwidth. These PRBs are identified by PRB indices.

Downlink control information (DCI) is mapped to the EPDCCH resources in localized mapping or distributed mapping, and transmitted. As illustrated in FIG. 9A, in localized mapping, one DCI is mapped, in a localized manner, to a specific PRB constituting the EPDCCH resources (for example, the PRB of the best channel quality). Since localized mapping is based on channel quality (CQI), it is possible to achieve frequency scheduling gain.

Meanwhile, as illustrated in FIG. 9B, in distributed mapping, one DCI is mapped, in a distributed manner, to a plurality of PRBs constituting the EPDCCH resources. Since one DCI is distributed in the frequency direction and arranged in distributed mapping, it is possible to achieve frequency diversity gain.

EPDCCH resources such as illustrated above are either configured semi-statically or determined in advance on a fixed basis. Consequently, once EPDCCH resources collide between small cells S, this collision will keep occurring. As a result of this, there is a threat that it is not possible to achieve the effect of randomizing the interference between the small cells S sufficiently with respect to CSI-RSs.

So, with the radio communication method according to the third example, the EPDCCH resources are prevented from colliding each other between small cells S by hopping the EPDCCH resources in accordance with a hopping pattern. As a result of this, it is possible to improve the effect of randomizing the interference between the small cells S with respect to the EPDCCH.

(Hopping Pattern of EPDCCH Resources)

FIG. 10 is a diagram to explain a hopping pattern of EPDCCH resources. FIG. 10 assumes that the PRB indices of the PRBs constituting the EPDCCH resources are configured to user terminals UE through higher layer signaling such as RRC signaling.

As illustrated in FIG. 10, the EPDCCH resources are hopped (shifted) in the frequency direction in accordance with a hopping pattern. Here, the hopping pattern refers to the combination of amounts of hopping (for example, the number of PRBs that are shifted, or the number of radio frames), determined by a function based on time.

For example, referring to FIG. 10, the EPDCCH resources of time t+a are shifted through two PRBs from the EPDCCH resources of time t in the frequency direction. Also, the EPDCCH resource of time t+b are shifted through three PRBs from the EPDCCH resources of time t+a in the frequency direction. The combination of these amounts of hopping (here, the numbers of PRBs) at times t, t+a and t+b (0, 2 and 3) may be referred to as the "hopping pattern." Note that, the values of the variable a and b in FIG. 10 may be set to be equal or may be set to be unequal.

Also, at times t+a and t+b in FIG. 10, two PRBs and five (2+3) PRBs stick out of the system band, respectively. Consequently, the PRBs that stick out from the system bandwidth are cyclic-shifted and returned inside the system band.

Also, in FIG. 10, the cycle of applying the hopping pattern is also referred to as the "hopping cycle." This hopping cycle may be determined in subframe (10 msec) units, or may be determined in radio frame (100 msec) units.

Also, when a NCT is employed in the small cells S (S cells), frame synchronization is established in the macro cell M (P cell). Consequently, it is possible to make the hopping cycle a comparatively long cycle, such as, for example, 1024 msec. By making the hopping cycle longer, the combinations of amounts of hopping in the hopping cycle increase, so that it is possible to increase the number of hopping patterns. As a result of this, it is possible to further improve the effect of randomizing the interference between the small cells S.

(Example of Reporting of Hopping Pattern of EPDCCH Resources)

Next, examples of reporting of EPDCCH resource hopping patterns will be described. Note that, in the following description, the EPDCCH resource hopping patterns may be reported from either the macro base station MeNB (P cell) or the small base stations SeNB (S cells), to user terminals UE.

To be more specific, the EPDCCH resource hopping patterns may be reported to the user terminals UE through higher layer signaling such as RRC signaling.

Also, the EPDCCH resource hopping patterns may be associated (linked) with USIDs. Also, when USIDs that are formed based on first USIDs and second USIDs are used, the EPDCCH resource hopping patterns may be associated with the second USIDs. In this case, the hopping patterns need not be reported apart from the USIDs, so that it is possible to reduce the amount of signaling.

Also, with the radio communication method according to the third example, whether or not to apply (ON/OFF) EPDCCH resource hopping may be designed switchable. To be more specific, whether or not to apply EPDCCH resource hopping may be associated with the value of the hopping pattern of EPDCCH resources and configured to the user terminals UE.

Also, whether or not to apply EPDCCH resource hopping may be reported to the user terminals UE by way of the value of second USIDs. Also, whether or not to apply EPDCCH resource hopping may be reported to the user terminals UE depending on whether or not USIDs are formed based on second USIDs. For example, when USIDs are formed based on second USIDs, this might mean that EPDCCH resource hopping is applied.

Also, it is equally possible to report whether or not to apply EPDCCH resource hopping to the user terminals UE by using independent bits. For example, when one bit is used, "0" may indicate that EPDCCH resource hopping is not applied ("OFF"), and "1" may indicate that EPDCCH resource hopping is applied ("ON").

With the radio communication method according to the third example, by hopping EPDCCH resources, it is possible to change the EPDCCH resources in a simplified manner, and in a short cycle. As a result of this, it is possible to improve the effect of randomizing the interference between the small cells S with respect to the EPDCCH.

(Structure of Radio Communication System)

Now, the radio communication system according to the present embodiment will be described below in detail. In this radio communication system, the radio communication methods according to the first to third examples are employed.

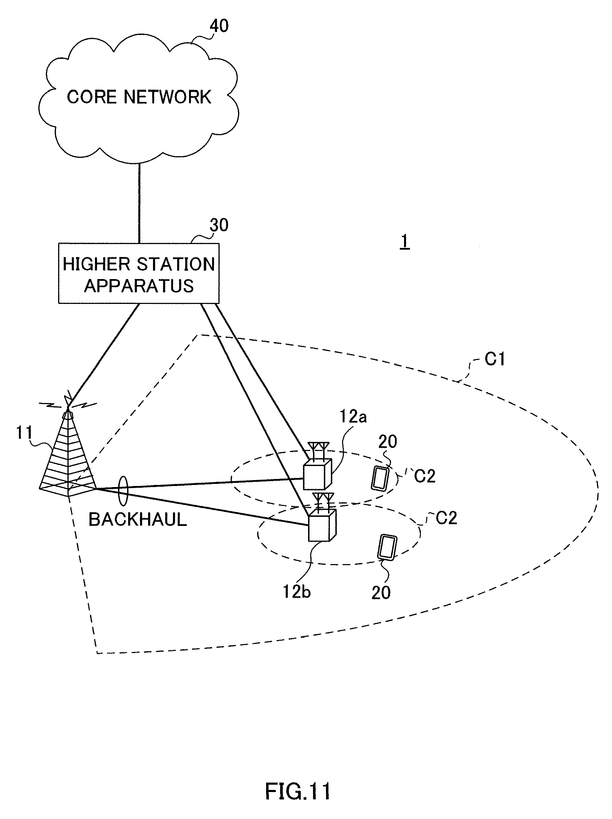

FIG. 11 is a diagram to illustrate a schematic structure of the radio communication system according to the present embodiment. As illustrated in FIG. 11, a radio communication system 1 includes a macro base station 11, which forms a macro cell C1, and small base stations 12a and 12b, which are located in the macro cell C1 and which form small cells C2 that are narrower than the macro cell C1. Also, user terminals 20 are located in the macro cell C 1 and each small cell C2. Note that the number of the macro cell C1 (the macro base station 11), the small cells C2 (the small base stations 12) and the user terminals 20 are not limited to that illustrated in FIG. 11.

Also, user terminals 20 are located in the macro cell C1 and in each small cell C2. The user terminals 20 are structured to be capable of carrying out radio communication with the macro base station 11 and the small base stations 12. Also, the user terminals 20 can communicate with a plurality of small base stations 12 by grouping the component carriers used in each small cell C2 (carrier aggregation). Alternatively, the user terminals 20 can communicate with the macro base station 11 and the small base stations 12 by grouping the component carriers used in the macro cell C 1 and the small cells C2.

Communication between the user terminals 20 and the macro base station 11 is carried out using a carrier of a relatively low frequency band (for example, 2 GHz). On the other hand, a carrier of a relatively high frequency band (for example, 3.5 GHz and so on) is used between the user terminals 20 and the small base stations 12, but this is by no means limiting. It is equally possible to use the same frequency band between the macro base station 11 and the small base stations 12.

The macro base station 11 and each small base station 12 may be connected via a channel (non-ideal backhaul) of relatively low speed (medium delay) such as the X2 interface, may be connected via a channel (ideal backhaul) of relatively high speed (low delay) such as optical fiber, or may be connected by radio. Also, the small base stations 12 may be connected via a channel (non-ideal backhaul) of relatively low speed (medium delay) such as the X2 interface, may be connected via a channel (ideal backhaul) of relatively high speed (low delay) such as optical fiber, or may be connected by radio.

The macro base station 11 and the small base stations 12 are each connected with a higher station apparatus 30, and are connected with a core network 40 via the higher station apparatus 30. Note that the higher station apparatus 30 may be, for example, an access gateway apparatus, a radio network controller (RNC), a mobility management entity (MME) and so on, but is by no means limited to these.

Note that the macro base station 11 is a radio base station having a relatively wide coverage, and may be referred to as an "eNodeB (eNB)," a "radio base station," a "transmission point" and so on. The small base stations 12 are radio base stations that have local coverages, and may be referred to as "RRHs (Remote Radio Heads)," "pico base stations," "femto base stations," "Home eNodeBs," "transmission points," "eNodeBs (eNBs)" and so on. The user terminals 20 are terminals to support various communication schemes such as LTE and LTE-A, and may not only be mobile communication terminals, but may also be fixed communication terminals as well.

Also, in the radio communication system 1, a physical downlink shared channel (PDSCH), which is used by each user terminal 20 on a shared basis, a physical downlink control channel (PDCCH), an enhanced physical downlink control channel (EPDCCH), a PCFICH, a PHICH, a broadcast channel (PBCH) and so on are used as downlink communication channels. User data and higher control information are transmitted by the PDSCH. Downlink control information (DCI) is transmitted by the PDCCH and the EPDCCH.

Also, in the radio communication system 1, a physical uplink shared channel (PUSCH), which is used by each user terminal 20 on a shared basis, a physical uplink control channel (PUCCH), a physical random access channel (PRACH) and so on are used as uplink communication channels. User data and higher control information are transmitted by the PUSCH. Also, by the PUCCH, downlink radio quality information (CQI: Channel Quality Indicator), delivery acknowledgement information (ACK/NACK) and so on are transmitted.

Also, in the radio communication system 1, terminal-specific reference signals to be associated with the PDSCH (also referred to as "UE-specific reference signals," "DM-RSs" and so on), demodulation reference signals to be associated with the EPDCCH (DM-RSs), channel state measurement reference signals (CSI-RSs), small cell C2 detection signals (DSs: Discovery Signals) and so on are used as downlink reference signals. Also, in the radio communication system 1, primary synchronization signals (PSSs) and secondary synchronization signals (SSSs) are used as downlink synchronization signals.

Also, in the radio communication system 1, demodulation reference signals (DM-RSs: Demodulation-Reference Signals) for the PUSCH or the PUCCH, SRSs (Sounding Reference Signals) and so on are used as uplink reference signals.

Also, in the radio communication system 1, a carrier type (NCT: New Carrier Type) that does not place the PDCCH in maximum three OFDM symbols at the top of one subframe may be used.

The macro base station 11 and the small base stations 12 will be hereinafter collectively referred to as "radio base station 10," unless distinction is drawn otherwise.

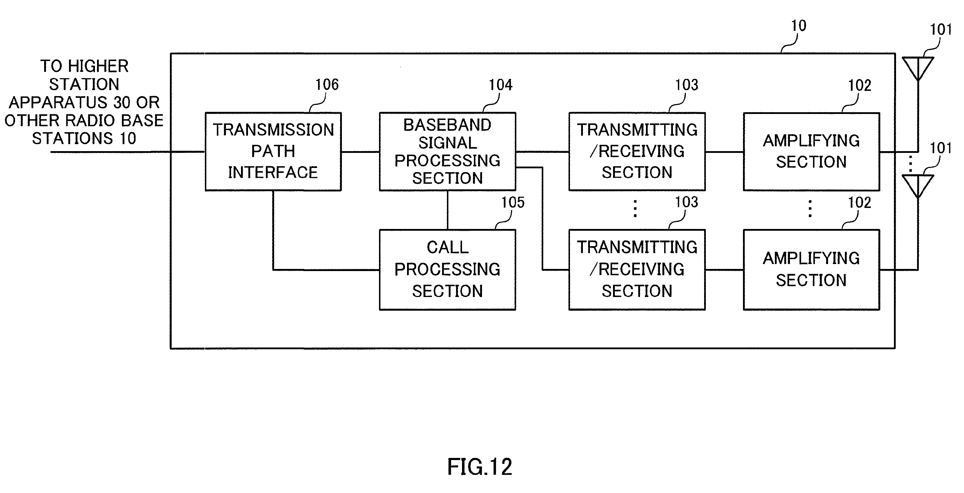

FIG. 12 is a diagram to illustrate an overall structure of a radio base station 10 according to the present embodiment. The radio base station 10 has a plurality of transmitting/receiving antennas 101 for MIMO transmission, an amplifying section 102, a transmitting/receiving section 103, a baseband signal processing section 104, a call processing 105 and a transmission path interface 106.

User data to be transmitted from the radio base station 10 to a user terminal 20 on the downlink is input from the higher station apparatus 30, into the baseband signal processing section 104, via the transmission path interface 106.

In the baseband signal processing section 104, a PDCP layer process, division and coupling of the user data, RLC (Radio Link Control) layer transmission processes such as an RLC retransmission control transmission process, MAC (Medium Access Control) retransmission control, including, for example, an HARQ transmission process, scheduling, transport format selection, channel coding, an inverse fast Fourier transform (IFFT) process and a precoding process are performed, and the result is transferred to each transmitting/receiving section 103. Furthermore, downlink control signals (including reference signals, synchronization signals, broadcast signals and so on) are also subjected to transmission processes such as channel coding and an inverse fast Fourier transform, and transferred to each transmitting/receiving section 103.

Each transmitting/receiving section 103 converts the downlink signals, which are pre-coded and output from the baseband signal processing section 104 on a per antenna basis, into a radio frequency band. The amplifying sections 102 amplify the radio frequency signals having been subjected to frequency conversion, and transmit the results through the transmitting/receiving antennas 101.

On the other hand, as for uplink signals, radio frequency signals that are received in the transmitting/receiving antennas 101 are each amplified in the amplifying sections 102, converted into baseband signals through frequency conversion in each transmitting/receiving section 103, and input in the baseband signal processing section 104.

In the baseband signal processing section 104, the user data that is included in the input uplink signals is subjected to an FFT process, an IDFT process, error correction decoding, a MAC retransmission control receiving process, and RLC layer and PDCP layer receiving processes, and transferred to the higher station apparatus 30 via the transmission path interface 106. The call processing section 105 performs call processing such as setting up and releasing communication channels, manages the state of the radio base station 10 and manages the radio resources.

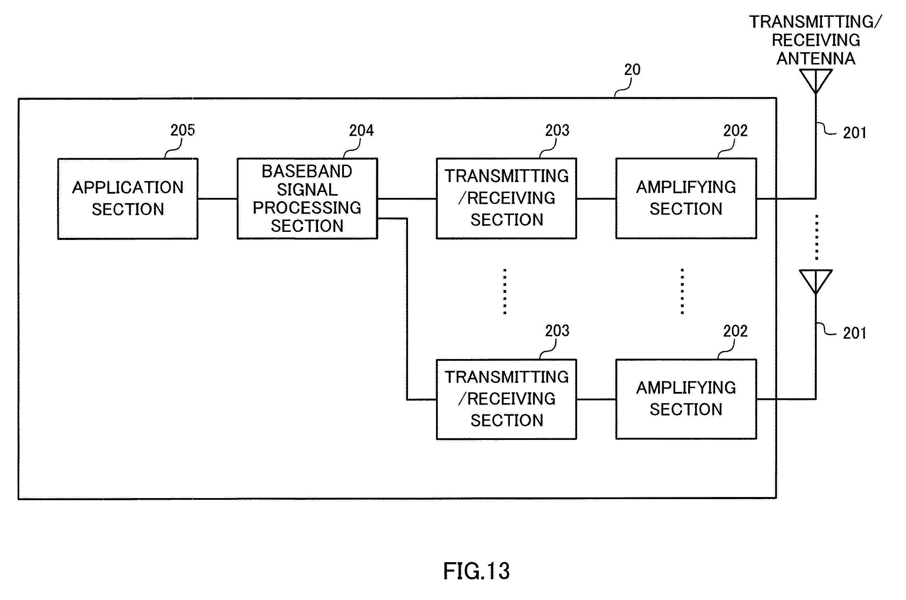

FIG. 13 is a diagram to illustrate an overall structure of a user terminal 20 according to the present embodiment. The user terminal 20 has a plurality of transmitting/receiving antennas 201 for MIMO transmission, an amplifying section 202, a transmitting/receiving section 203, a baseband signal processing section 204 and an application section 205.

As for downlink signals, radio frequency signals that are received in a plurality of transmitting/receiving antennas 201 are each amplified in the amplifying sections 202, subjected to frequency conversion in the transmitting/receiving sections 203, and input in the baseband signal processing section 204. In the baseband signal processing section 204, an FFT process, error correction decoding, a retransmission control receiving process and so on are performed. The user data that is included in the downlink signals is transferred to the application section 205. The application section 205 performs processes related to higher layers above the physical layer and the MAC layer. The broadcast information in the downlink data is also transferred to the application section 205.

Meanwhile, uplink user data is input from the application section 205 to the baseband signal processing section 204. In the baseband signal processing section 204, a retransmission control (H-ARQ (Hybrid ARQ)) transmission process, channel coding, precoding, a DFT process, an IFFT process and so on are performed, and the result is transferred to each transmitting/receiving section 203. Baseband signals that are output from the baseband signal processing section 204 are converted into a radio frequency band in the transmitting/receiving sections 203. After that, the amplifying sections 202 amplify the radio frequency signals having been subjected to frequency conversion, and transmit the results from the transmitting/receiving antennas 201.

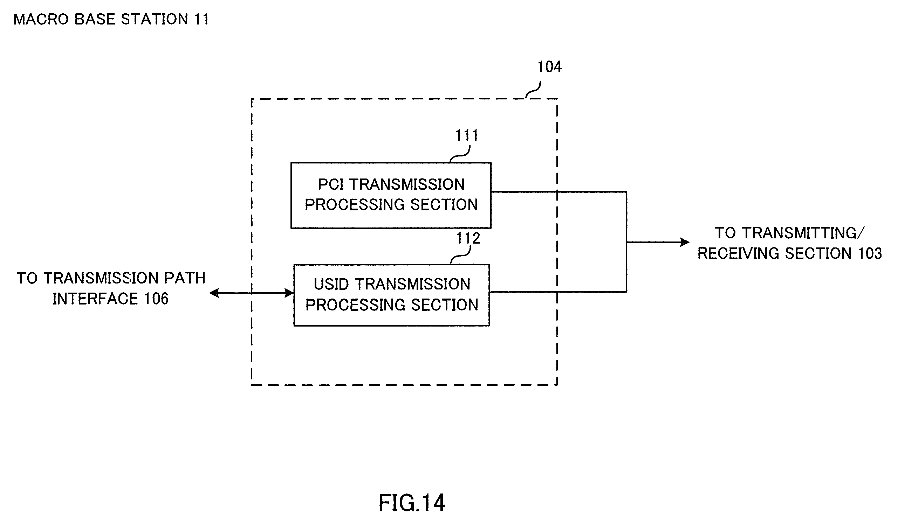

Next, functional structures of a macro base station 11, a small base station 12, and a user terminal 20 will be described in detail with reference to FIG. 14 to FIG. 16.

FIG. 14 is a diagram to illustrate a functional structure of a macro base station 11 according to the present embodiment. As illustrated in FIG. 14, the macro base station 11 has a PCI transmission processing section 111 and a USID transmission processing section 112. Note that, in the second example of reporting of USIDs (see FIG. 5), the USID transmission processing section 112 may be omitted. Also, the following functional structure is formed with the baseband signal processing section 104 provided in the macro base station 11 and so on.

The PCI transmission processing section 111 performs the transmission processing (for example, modulation, coding and so on) of the cell ID (PCI) of the macro base station 11. To be more specific, the PCI transmission processing section 111 transmits the synchronization signal (PSS, SSS) that are used in cell ID detection.

The USID transmission processing section 112 performs the transmission process (for example, modulation, coding and so on) of USIDs. The USIDs may be formed based on the operation result of first USIDs and second USIDs (FIG. 3).

To be more specific, the USID transmission processing section 112 generates higher control information (for example, RRC layer and MAC layer) including USIDs, and perform the transmission process of the higher control information that is generated. Alternatively, the USID transmission processing section 112 may generate broadcast information including USIDs and perform the transmission process of the broadcast information that is generated. Also, the USID transmission processing section 112 may report the USIDs to the small base stations 12 via the transmission path interface 106.

Also, the USID transmission processing section 112 may generate higher control information (for example, RRC layer and MAC layer) that does not include second USIDs but includes first USIDs, and perform the transmission process of the higher control information that is generated. Also, the USID transmission processing section 112 may report the second USIDs to the small base station 12 via the transmission path interface 106.

Also, the USID acquiring section 112 may switch between forming USIDs based on first USIDs and second USIDs and forming USIDs based on first USIDs, not based on second USIDs, depending on the transmission mode and/or the carrier type in the small cells C2 and so on.

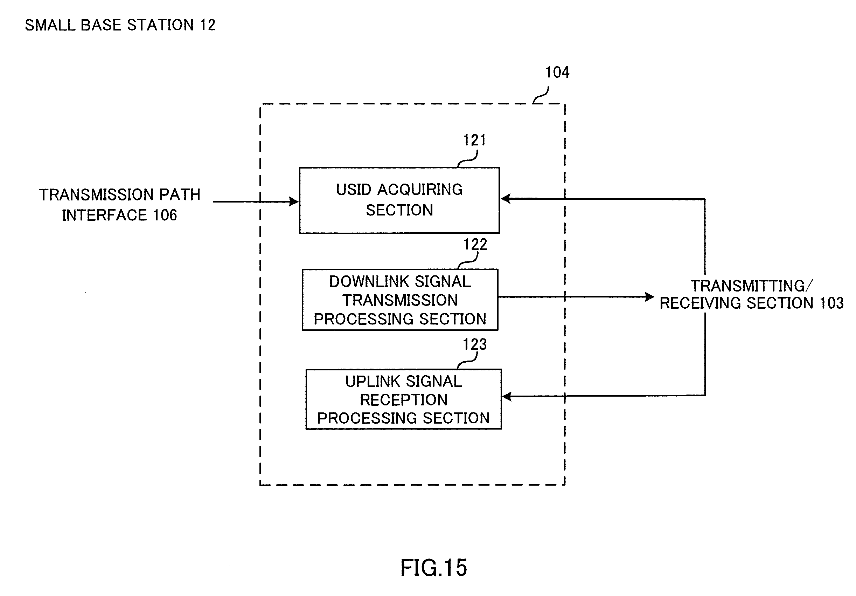

FIG. 15 is a diagram to illustrate a functional structure of a small base station 12 according to the present embodiment. As illustrated in FIG. 15, the small base station 12 has a USID acquiring section 121, a downlink signal transmission processing section 122 and an uplink signal reception processing section 123. Note that the following functional structure is formed with the baseband signal processing section 104 provided in the small base station 12 and so on.

The USID acquiring section 121 acquires the USIDs to be used in the transmission process of downlink signals/the receiving process of uplink signals. To be more specific, the USID acquiring section 121 may acquire USIDs from the macro base station 11 via the transmission path interface 106, or acquire USIDs that are stored in a memory section (not illustrated) in advance. Also, the USID acquiring section 121 may acquire USIDs by operating first USIDs and second USIDs.

The downlink signal transmission processing section 122 performs the transmission process (for example, scrambling, mapping, modulation, coding and so on) of downlink signals using the USIDs acquired in the USID acquiring section 121. The downlink signal transmission processing section 122 constitutes the generating section (which generates downlink signals) and the mapping section (which maps downlink signals to resources) of the present invention.

To be more specific, the downlink signal transmission processing section 122 may initialize pseudo-random sequences (scrambling sequences) based on the USIDs, and generate (scramble) downlink signals based on the initialized pseudo-random sequences (see the first example and step S102 in FIG. 4). As noted earlier, the downlink signals include, for example, CS-RSs, EPDCCH transmission signals, DM-RSs for the EPDCCH, DM-RSs for the PDSCH, PDSCH transmission signals and so on, but are by no means limited to these.

Also, the downlink signal transmission processing section 122 may map the downlink signals to resources that are arranged and hopped based on a hopping pattern. To be more specific, the downlink signal transmission processing section 122 may map CSI-RSs to resources that are arranged and hopped in accordance with a hopping pattern (arrangement resources designated by CSI-RS configurations that are hopped) (see the second example and FIG. 8). Also, the downlink signal transmission processing section 122 may map the EPDCCH transmission signals to resources (EPDCCH resources) that are arranged and hopped in accordance with a hopping pattern (see the third example and FIG. 10).

Note that the hopping pattern may be determined by a function based on time. Also, this hopping cycle may be determined in subframe (10 msec) units, or may be determined in radio frame (100 msec) units. When a NCT is employed in the small base stations 12, the hopping cycle may be set to a comparatively long cycle such as 1024 msec.

The uplink signal reception processing section 123 performs the receiving process (for example, descrambling, demapping, demodulation, decoding and so on) of uplink signals using the USIDs acquired in the USID acquiring section 121.

To be more specific, the uplink signal reception processing section 123 initializes pseudo-random sequences (scrambling sequences) based on the USIDs, and performs the receiving process (descrambling) of the uplink signals based on the initialized pseudo-random sequences (see the first example and step S105 in FIG. 4). As noted earlier, the uplink signals include, for example, DM-RS for the PUSCH or the PUCCH, PUSCH transmission signals, PUCCH transmission signals, SRSs and so on, but are by no means limited to these.

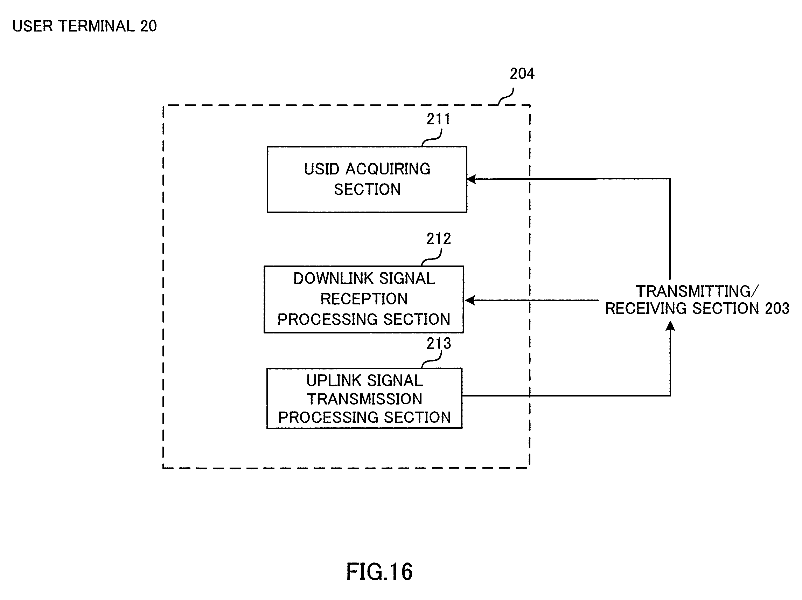

FIG. 16 is a diagram to illustrate a functional structure of a user terminal 20 according to the present embodiment. As illustrated in FIG. 16, the user terminal 20 has a USID acquiring section 211, a downlink signal reception processing section 212, an uplink signal transmission processing section 213. Note that the following functional structure is formed with the baseband signal processing section 204 provided in the user terminal 20 and so on.

The USID acquiring section 211 acquires the USIDs to be used in the receiving process of downlink signals/the transmission process of uplink signals. To be more specific, the USID acquiring section 211 acquires higher control information (for example, RRC layer and MAC layer) or broadcast information, including USIDs, from the macro base station 11 or the small base stations 12.

Also, the USID acquiring section 211 may acquire higher control information or broadcast information including first USIDs, transmitted from the macro base station 11, and, meanwhile, acquire higher control information or broadcast information including second USIDs, transmitted from the small base stations 12.

Also, the USID acquiring section 211 may acquire the second USIDs associated with small cell C2 detection signals (discovery signals). Here, the user terminal 20 can receive the detection signals in intermittent reception mode (for example, idle mode, DRX mode and so on), active mode and so on (see, for example, case 1 to case 4 of FIG. 17). Also, user terminal 20 in intermittent reception mode may receive the detection signals in a longer cycle than in active mode.

Also, the USID acquiring section 211 may acquire the second USID associated with the cell ID of the macro cell C2. The cell ID of the macro cell C1 may be detected based on synchronization signals (PSS, SSS) from the macro base station 11. Note that, when second USIDs are associated with the small cell C2 detection signals and the cell ID of the macro cell C1, the signaling of the second USIDs can be skipped, and this may be effective to reduce the amount of signaling.

Also, the USID acquiring section 211 may switch between acquiring USIDs that are formed based on first USIDs and second USIDs, and acquiring first USIDs (the USIDs of release 11) without acquiring second USIDs, depending on the transmission mode and/or the carrier type in the small cells C2.

The downlink signal reception processing section 212 performs the receiving process of downlink signals (for example, descrambling, demapping, demodulation, decoding and so on) by using the USIDs acquired in the USID acquiring section 211.

To be more specific, the downlink signal reception processing section 212 initialize pseudo-random sequences (scrambling sequences) based on the USIDs, and performs the receiving process of downlink signals (descrambling) based on the initialized pseudo-random sequences (see the first example and step S103 in FIG. 4).

Also, the downlink signal reception processing section 212 may demap the downlink signals mapped to resources that are arranged and hopped in accordance with a hopping pattern. Note that the hopping pattern may be reported from the macro base station 11 or the small base stations 12 through higher layer signaling such as RRC signaling. Alternatively, the hopping pattern may be associated with USIDs acquired in the USID acquiring section 211. Also, the USIDs to which the hopping pattern is associated may be USIDs that are formed based on first USIDs and second USIDs, or may be second USIDs.

The uplink signal transmission processing section 213 performs the transmission process (for example, scrambling, hopping, mapping to radio resources, modulation, coding and so on) of uplink signals using the USIDs acquired in the USID acquiring section 211. The uplink signal transmission processing section 213 constitutes the generating section (which generates uplink signals) and the mapping section (which maps uplink signals to resources) of the present invention.

To be more specific, the uplink signal transmission processing section 213 may initialize pseudo-random sequences (scrambling sequences) based on the USIDs, and generate (scramble) uplink signals based on the initialized pseudo-random sequences (see the first example and step S104 in FIG. 4).

In the radio communication system 1, downlink/uplink signals are generated in the small cells C2 by using USIDs that are formed based on first USIDs and second USIDs. Consequently, it is possible to prevent the USIDs from colliding each other between user terminals 20 located in neighboring small cells C2, and randomize the interference between the small cells Cs sufficiently. Also, since downlink signals are arranged in resources that are arranged and hopped in accordance with a hopping pattern, it is possible to improve the effect of randomizing the interference between the small cells C2.

Now, although the present invention has been described in detail with reference to the above embodiments, it should be obvious to a person skilled in the art that the present invention is by no means limited to the embodiments described herein. The present invention can be implemented with various corrections and in various modifications, without departing from the spirit and scope of the present invention defined by the recitations of the claims. Consequently, the descriptions herein are provided only for the purpose of explaining examples, and should by no means be construed to limit the present invention in any way.

The disclosure of Japanese Patent Application No. 2013-079296, filed on April 5, 2013, including the specification, drawings and abstract, is incorporated herein by reference in its entirety.

**Claims**

1. A radio base station that, in a radio communication system in which a small cell is located to overlap a macro cell, forms the small cell, the radio base station comprising:

   a generating section that generates a downlink signal by using a terminal-specific identity that is formed based on a first terminal-specific identity and a second terminal-specific identity; and
   a transmission section that transmits the downlink signal to a user terminal.

2. The radio base station according to claim 1, wherein the terminal-specific identity is reported from a macro base station which forms the macro cell, to the user terminal.

3. The radio base station according to claim 1, wherein the terminal-specific identity is reported from the radio base station to the user terminal, or is associated with a detection signal that is transmitted from the radio base station.

4. The radio base station according to claim 1, wherein
   the first terminal-specific identity is reported from a macro base station which forms the macro cell, to the user terminal, and
   the second terminal-specific identity is associated with a detection signal that is transmitted from the radio base station.

5. The radio base station according to claim 1, wherein
   the first terminal-specific identity is reported from a macro base station which forms the macro cell, to the user terminal, and
   the second terminal-specific identity is associated with a cell identity of the macro cell.

6. The radio base station according to any one of claim 1 to claim 5, wherein whether or not to form the terminal-specific identity based on the first terminal-specific identity and the second terminal-specific identity is determined depending on a transmission mode and/or a carrier type in the small cell.

7. The radio base station according to any one of claim 1 to claim 5, wherein
   the downlink signal is a channel state information-reference signal (CSI-RS),
   the radio base station further comprises a mapping section that maps the CSI-RS to a resource that is arranged and hopped based on a hopping pattern, and
   the hopping pattern is determined by a function based on time.

8. The radio base station according to any one of claim 1 to claim 5, wherein
   the downlink signal is a transmission signal by an enhanced physical downlink control channel (EPDCCH),
   the radio base station further comprises a mapping section that maps the transmission signal to a resource that is arranged and hopped based on a hopping pattern, and
   the hopping pattern is determined by a function based on time.

9. A user terminal used in a radio communication system in which a small cell is located to overlap a macro cell, the user terminal comprising:

a generating section that generates an uplink signal by using a terminal-specific identity that is formed based on a first terminal-specific identity and a second terminal-specific identity; and
a transmission section that transmits the uplink signal to a small base station which forms the small cell.

10. A radio communication method used in a radio communication system in which a small cell is located to overlap a macro cell, the radio communication method comprising the steps of:

generating, in a small base station forming the small cell, a downlink signal by using a terminal-specific identity that is formed based on a first terminal-specific identity and a second terminal-specific identity;
transmitting, in the small bases station, the downlink signal to a user terminal;
generating, in the user terminal, an uplink signal by using the terminal-specific identity; and
transmitting, in the user terminal, the uplink signal to the small base station.

FIG.1

FIG.2

## FIG.3A

| | | |
|---|---|---|
| 1st USID (504) | $\otimes$ | 2nd USID (X) |

$X < 504$ or $X = 504$ or $X > 504$

## FIG.3B

|  | INDEPENDENT |  | SHARED |
|---|---|---|---|
| CHANNEL/SIGNAL #A | 1st USID #A (504) | $\otimes$ | 2nd USID (X) |
| CHANNEL/SIGNAL #B | 1st USID #B (504) | $\otimes$ | 2nd USID (X) |
| CHANNEL/SIGNAL #C | 1st USID #C (504) | $\otimes$ | 2nd USID (X) |

FIG.4

MeNB                          UE                          SeNB

S201                          USID

S202

GENERATE
DOWNLINK
SIGNAL

S203    DOWNLINK
SIGNAL

S204

GENERATE
UPLINK
SIGNAL

S205    UPLINK SIGNAL

FIG.5

MeNB                          UE                          SeNB

                    FIRST USID   S301
         ———————————————————————————→
                              S302    SECOND USID
                         ←————————————————————————

                                             S303

                                    ┌─────────────────┐
                                    │    GENERATE     │
                                    │    DOWNLINK     │
                                    │     SIGNAL      │
                                    └─────────────────┘

                              S304    DOWNLINK
                                        SIGNAL
                         ←————————————————————————

                 S305
        ┌─────────────────┐
        │    GENERATE     │
        │     UPLINK      │
        │     SIGNAL      │
        └─────────────────┘

                    S306    UPLINK SIGNAL
         ————————————————————————————————→


FIG.6

MeNB                           UE                           SeNB

SYNCHRONIZATION  S401
SIGNAL

FIRST USID    S402

S403

GENERATE
DOWNLINK
SIGNAL

S404    DOWNLINK
SIGNAL

S405

GENERATE
UPLINK
SIGNAL

S406    UPLINK SIGNAL

FIG.7

FIG.8

## FIG.9A

EPDCCH RESOURCE
CONFIGURED BY HIGHER LAYER

1 DCI

PDSCH IF AVAILABLE

FREQUENCY
(PRB INDEX)

LOCALIZED MAPPING

## FIG.9B

1 DCI

DIVISION UNIT

FREQUENCY
(PRB INDEX)

DISTRIBUTED MAPPING

SYSTEM BAND

t

HOPPING
CYCLE

t+a

t+b

FREQUENCY
(PRB INDEX)

AMOUNT OF HOPPING

CYCLIC-SHIFTED AND
RETURNED INSIDE
SYSTEM BAND

EPDCCH RESOURCE

FIG.10

40

CORE NETWORK

1

30

HIGHER STATION
APPARATUS

C1

12a

20

11

C2

BACKHAUL

C2

12b

20

FIG.11

FIG.12

TRANSMITTING/
RECEIVING
ANTENNA

20

205
APPLICATION SECTION

204
BASEBAND SIGNAL PROCESSING SECTION

203
TRANSMITTING /RECEIVING SECTION

202
AMPLIFYING SECTION

201

203
TRANSMITTING /RECEIVING SECTION

202
AMPLIFYING SECTION

201

FIG.13

EP 2 983 392 A1

31

MACRO BASE STATION 11

FIG.14

EP 2 983 392 A1

SMALL BASE STATION 12

FIG.15

EP 2 983 392 A1

USER TERMINAL 20

FIG.16

EP 2 983 392 A1

FIG.17

EP 2 983 392 A1

**INTERNATIONAL SEARCH REPORT**

| International application No. |
| --- |
| PCT/JP2014/058346 |

A. CLASSIFICATION OF SUBJECT MATTER
*H04W16/16*(2009.01)i, *H04W8/26*(2009.01)i, *H04W16/32*(2009.01)i, *H04W72/04*
(2009.01)i

According to International Patent Classification (IPC) or to both national classification and IPC

B. FIELDS SEARCHED

Minimum documentation searched (classification system followed by classification symbols)
H04W16/16, H04W8/26, H04W16/32, H04W72/04

Documentation searched other than minimum documentation to the extent that such documents are included in the fields searched
Jitsuyo Shinan Koho        1922-1996    Jitsuyo Shinan Toroku Koho    1996-2014
Kokai Jitsuyo Shinan Koho   1971-2014    Toroku Jitsuyo Shinan Koho    1994-2014

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y<br>A | WO 2013/002528 A2  (LG Electronics Inc.),<br>03 January 2013 (03.01.2013),<br>paragraphs [0070], [0077] to [0080]; fig. 6<br>& EP 2731283 A2        & US 2014/0119317 A1<br>& KR 10-2014-0016376 A   & CN 103636151 A | 1-5,7-10<br>6 |
| Y<br>A | JP 2013-500643 A  (China Academy of<br>Telecommunications Technology),<br>07 January 2013 (07.01.2013),<br>paragraphs [0075], [0076]<br>& EP 2461608 A1        & US 2012/0127913 A1<br>& KR 10-2012-0043031 A   & CN 101969602 A | 1-5,7-10<br>6 |

| [×]  Further documents are listed in the continuation of Box C. | [ ]    See patent family annex. |
| --- | --- |

| *    Special categories of cited documents: | "T"  later document published after the international filing date or priority date and not in conflict with the application but cited to understand the principle or theory underlying the invention |
| --- | --- |
| "A"  document defining the general state of the art which is not considered    to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search<br>    23 June, 2014 (23.06.14) | Date of mailing of the international search report<br>    01 July, 2014 (01.07.14) |
| --- | --- |
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2014/058346 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | WO 2011/140264 A1  (Qualcomm Inc.),<br>10 November 2011 (10.11.2011),<br>paragraph [0087]<br>& JP 2013-530604 A        & EP 2567495 A1<br>& US 2012/0106374 A1     & KR 10-2013-0016723 A<br>& CN 102884751 A         & TW 201210288 A1 | 7 |
| Y | WO 2013/015195 A1  (Sharp Corp.),<br>31 January 2013 (31.01.2013),<br>paragraphs [0039], [0040]; fig. 10<br>& JP 2013/026877 A       & EP 2736295 A1<br>& US 2014/0133452 A1     & KR 10-2014-0050673 A<br>& CN 103688584 A         & CA 2842305 A1 | 8 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013079296 A

**Non-patent literature cited in the description**

- E-UTRA Further Advancements for E-UTRA Physical Layer Aspects. *3GPP TR 36.814*